# EUROPEAN PATENT APPLICATION

(11) **EP 1 995 090 A2**
(43) Date of publication of application: **26.11.2008**
(21) Application number: 08008443.7
(22) Date of filing: 05.05.2008
(51) Int. Cl.: B60G 17/018, B60G 17/027

(54) **Suspension apparatus**

(30) Priority: 21.05.2007 JP 2007134372
(71) Applicant: AISIN SEIKI KABUSHIKI KAISHA, Kariya-shi, Aichi-ken 448-8650 (JP)
(72) Inventor: Yamanaka, Toshihiko, Kariya-shi Aichi-ken, 448-8650 (JP); Aikyo, Hideyuki, Kariya-shi Aichi-ken, 448-8650 (JP); Komatsu, Satoshi, Kariya-shi Aichi-ken, 448-8650 (JP)
(74) Representative: Winter, Brandl, Fürniss, Hübner Röss, Kaiser, Polte Partnerschaft Patent- und Rechtsanwaltskanzlei

(57) **Abstract**

A suspension apparatus includes a single-phase linear motor (40), a state detecting sensor (30) and a controlling portion (10). The single-phase liner motor (40) includes a coil (41) and a permanent magnet (42). The coil (41) is adapted to be provided at one of a vehicle body-side member (80) and a wheel-side member (81) of a vehicle. The permanent magnet (42) is adapted to be provided at the other of the vehicle body-side member (80) and the wheel-side member (81) of the vehicle. The state detecting sensor (30) detects a relative moving state between the vehicle body-side member (80) and the wheel-side member (81) and an absolute moving state of the vehicle body-side member (80). The controlling portion (10) controls a load outputted by the single-phase linear motor (40) on the basis of a result detected by the state detecting sensor (30).

## Description

### FIELD OF THE INVENTION

The present invention generally relates to a suspension apparatus for a vehicle.

### BACKGROUND

A suspension apparatus has been employed for a comfortable riding quality of a vehicle. One of such suspension apparatus is disclosed in JP2001-280416A (hereinafter, referred to as reference 1), for example. The suspension apparatus disclosed in the reference 1 includes an electromagnetic suspension having a three-phase motor, in which plural coils and plural permanent magnets are provided. Further, the electromagnetic suspension employing the three-pliase motor is provided with at least two Hall ICs as magnetic force detecting means for detecting magnetic force of the permanent magnets. More specifically, the Hall ICs detects a position of the permanent magnets (slider) relative to the coils. Thus, the electromagnetic suspension energizes each coil of corresponding phase in response to the position of the permanent magnet, hence performing a control of the permanent magnet. Further, a stroke position of the suspension apparatus in a case where one of the two Hall ICs (magnetic force detecting means) does not detect the magnetic force is assigned to be a stroke end. Then, when an axial relative position between the permanent magnet and the coil approaches the stroke end, the suspension apparatus is controlled to adjust electric current supplied to the coils so that the relative position between the permanent magnet and the coil does not reach the stroke end.

Thus, in the electromagnetic suspension apparatus according to the reference 1, the three-phase motor is employed. Therefore, there is a requirement for accurately detecting the position of the permanent magnets (slider) relative to the coils when controlling the supply of the electric current (energization) to the coils, hence leading to a requirement for the magnetic force detecting means such as at least two Hall ICs. Accordingly, a structure of the electromagnetic suspension may be complicated, and an employment of the Hall ICs and the detecting circuit may lead to an increase in cost. In addition, the control of the supply of the electric current (energization) to the coils is executed in response to the relative position between the coils and the permanent magnets and therefore, the supply of the electric current to the coils requires to be switched quickly in response to a quick movement of the permanent magnets. Thus, because a control for quickly switching the electric current is desired, load on a calculation processing portion such as CPU may be increased. Further, on the contrary, a maximum speed of the electromagnetic suspension, which is controlled by the load on the calculation processing portion, may be determined. Therefore, a limit of control response performance may be lowered.

A need thus exists for a suspension apparatus, which achieves an improvement on a riding quality of a vehicle and a reduction of cost, and which includes high control response performance.

### SUMMARY OF THE INVENTION

According to an aspect of the present invention, a suspension apparatus includes a single-phase linear motor, a state detecting sensor and a controlling portion. The single-phase liner motor includes a coil and a permanent magnet. The coil is adapted to be provided at one of a vehicle body-side member and a wheel-side member of a vehicle. The permanent magnet is adapted to be provided at the other of the vehicle body-side member and the wheel-side member of the vehicle. The state detecting sensor detects a relative moving state between the vehicle body-side member and the wheel-side member and an absolute moving state of the vehicle body-side member. The controlling portion controls a load outputted by the single-phase linear motor on the basis of a result detected by the state detecting sensor.

Due to the above described structure, because the single-phase linear motor is employed for the suspension apparatus, the controlling portion controls the load outputted by the single-phase linear portion in response to a direction and magnitude of force calculated on the basis of the result (a sensor signal) outputted by the state detecting sensor 30, which detects the relative moving state between the vehicle body-side member and the wheel-side member and the absolute moving state of the vehicle body-side member. Accordingly, load received by the vehicle (i.e., vibration of the vehicle body-side member, such as, for example, a vehicle body) may be readily restrained. Thus, with the suspension apparatus, occupants of the vehicle may be provided with comfortable riding quality without feeling a large vibration of the vehicle. Further, a detecting means (for example, Hall ICs) for detecting a relative positional relationship between the coils and the permanent magnets is omitted, thus achieving a simplification of a detection circuit and reduction in cost. Still further, a calculation in the controlling portion is simplified, so that a load of the controlling portion may be reduced and fast response of the load control may be achieved.

Further according to an aspect of the present invention, the suspension apparatus further includes a shock absorbing mechanism having first and second hydraulic chambers, each of which volume is changeable in accordance with a relative movement between the vehicle body-side member and the wheel-side member. The shock absorbing mechanism further includes a valve for adjusting volume of fluid flowing between the first and second hydraulic chambers.

Due to the above described structure, the amount of the fluid in each of the first and second hydraulic chambers is adjusted by controlling the valve, thus controlling the load outputted by the single-phase linear motor. Further, shock absorption of the vehicle body-side member (such as the vehicle body) may be efficiently performed by applying load generated by means of the valve to the vehicle body-side member.

Still further according to an aspect of the present invention, the suspension apparatus further includes a shock absorber serving as the shock absorbing mechanism. The suspension apparatus recovers electromotive force generated in the single-phase linear motor by a stroke of the shock absorber as regenerated current.

Due to the above described structure, a battery may be charged with the regenerated current, thus improving energy consumption of the vehicle.

Still further according to an aspect of the present invention, the shock absorber includes an outer cylinder assembled on the wheel-side member of the vehicle. The permanent magnet is provided at the outer cylinder of the shock absorber. The coil is provided at the vehicle body-side member.

Due to the above described structure, the outer cylinder is assembled on the wheel-side member by an assembling portion, hence allowing the permanent magnets to move in association with the wheel-side member. On the other hand, the coils are assembled on another assembling portion via jigs, hence moving in association with the vehicle body-side member. Accordingly, the relative position (relative displacement) between the coils and the permanent magnets is changed, hence allowing a relative position between the vehicle body-side member and the wheel-side member to change.

Still further according to an aspect of the present invention, load received by the vehicle is controlled by a combination of an electric control of the single-phase linear motor performed by the controlling portion and a hydraulic control performed by the shock absorbing mechanism.

Due to the above described structure, the load control may be performed only by the single-phase linear motor (electric control) and by a combination of the electric control of the single-phase linear motor and the hydraulic control. Thus, the load controlling force of the suspension apparatus for counteracting the load received by the vehicle may be adjusted within a variable range.

### BRIEF DESCRIPTION OF THE DRAWINGS

The foregoing and additional features and characteristics of the present invention will become more apparent from the following detailed description considered with reference to the accompanying drawings, wherein:

Fig. 1 is a schematic view illustrating a structure of a suspension apparatus;

Fig. 2 is a schematic view illustrating a partial structure of the suspension apparatus according to a first embodiment;

Fig. 3 is a flowchart diagram of calculation performed by a calculating portion; and

Fig. 4 is a schematic view illustrating a partial structure of the suspension apparatus according to a second embodiment.

### DETAILED DESCRIPTION

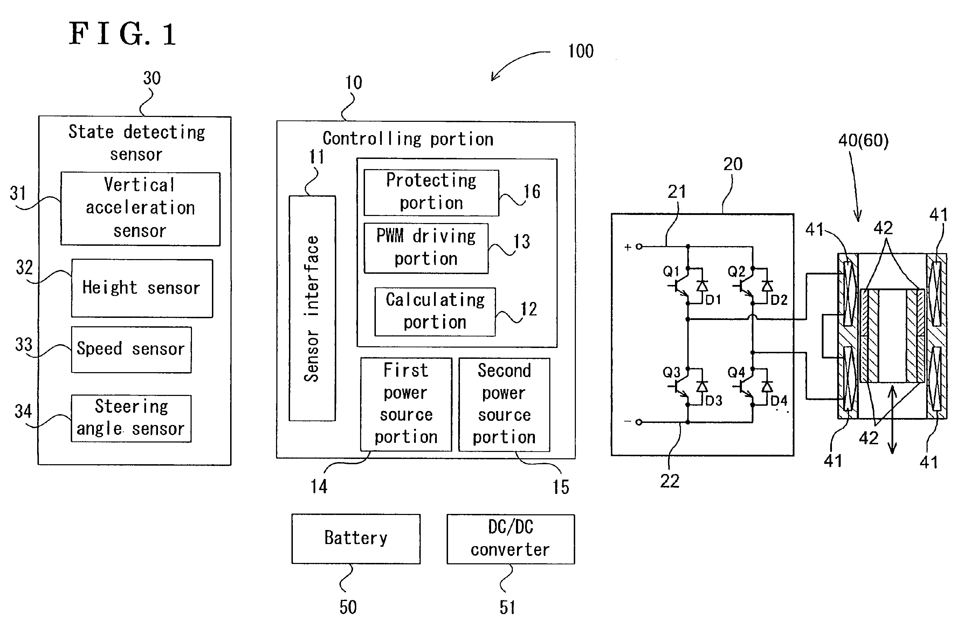

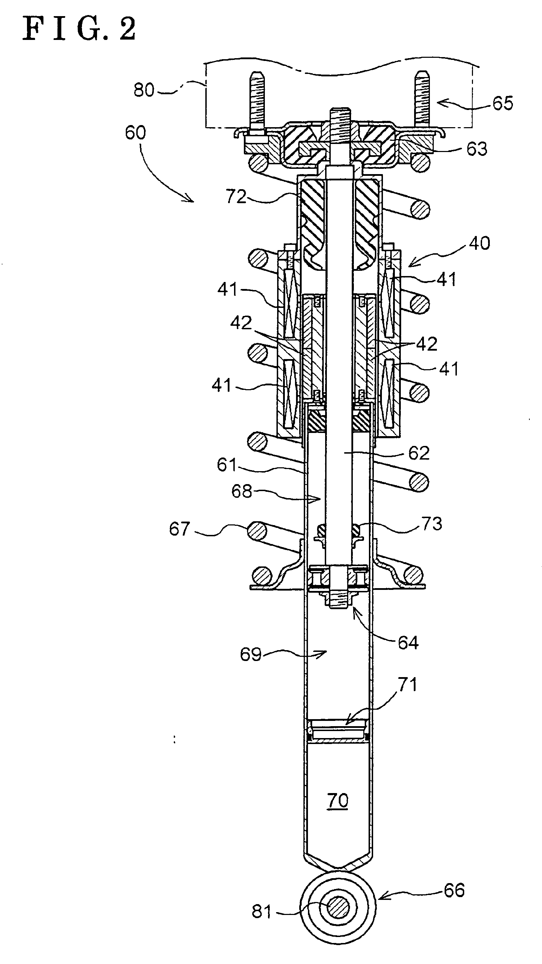

A first embodiment of the present invention will be described hereinafter with reference to the attached drawings. Fig. 1 is a schematic view illustrating a configuration of a suspension apparatus, generally indicated by reference numeral 100, according to the first embodiment. Hereinafter, directions, such as "front/rear", "up/down", "vertical", "lateral", or the like, correspond to an orientation of the vehicle. The suspension apparatus 100 includes a controlling portion 10, a driver 20, a state detecting sensor 30 and an electromagnetic suspension (not illustrated). A shock absorber 60 (see Fig. 2) is employed as a shock absorbing mechanism of the electromagnetic suspension and is provided with a single-phase linear motor 40. The suspension apparatus 100 is mounted on a vehicle including a vehicle body-side member 80 and a wheel-side member 81 (see Fig. 2). The state detecting sensor 30 includes sensors for detecting a relative moving state between the vehicle body-side member 80 and the wheel-side member 81 and for detecting an absolute moving state of the vehicle body-side member 80. A vertical acceleration sensor 31, a height sensor 32, a speed sensor 33 and a steering angle sensor 34 are employed as such sensors. The vertical acceleration sensor (acceleration sensor) 31 detects, for example, acceleration which the vehicle receives in the vertical direction when being moved upwardly and downwardly. The height sensor 32 detects a relative position between the vehicle body-side member 80 and the wheel-side member 81, i.e., difference between height of the vehicle body-side member 80 and height of the wheel-side member 81. The speed sensor 33 detects speed of the vehicle. The steering angle sensor 34 detects a steering angle of a steering wheel (not illustrated). Though not illustrated in the drawings, the state detecting sensor 30 may include, for example, an acceleration sensor for detecting acceleration which the vehicle receives in the longitudinal direction and the lateral direction of the vehicle when the vehicle accelerates, in addition to the aforementioned sensors. Herein, the absolute moving state of the vehicle body-side member 80 indicates a moving state of components, such as a vehicle body, arranged above a spring of the electromagnetic suspension.

According to the first embodiment, the shock absorber 60 (which will be described later) of the electromagnetic suspension includes the single-phase linear motor 40, which is a single-phase driving type motor. The single-phase linear motor 40 is formed with coils 41 and permanent magnets 42. In the single-phase linear motor 40, the coils 41 are provided at one of the vehicle body-side member 80 and the wheel-side member 81, and the permanent magnets 42 are provided at the other of the vehicle body-side member 80 and the wheel-side member 81, so that a relative position (relative displacement) between the coils 41 and the permanent magnets 42 is changeable. Herein, for example, two coils 41 are provided at the single-phase linear motor 40 as illustrated in Fig. 1. However, the number of the single-phase linear motor 40 may not be limited to one as far as the relative position between the coils 41 and the permanent magnets 42 is changeable and a plurality of the single-phase linear motor 40 can be mounted on the suspension apparatus 100. The coil 41 and the permanent magnet 42 are energized to generate attracting force or repulsive force by controlling magnitude and a direction of the applied electric current, thus achieving a control of load between the coil 41 and the permanent magnet 42, i.e., the load outputted by the single-phase linear motor 40.

The coils 41 are energized via the driver 20. As illustrated in Fig. 1, the driver 20 is structured by a half bridge driver circuit (hereinafter, referred to as H bridge driver circuit). The H bridge driver circuit is structured with four transistors Q1, Q2, Q3 and Q4. In a case where only the transistor Q1 and the transistor Q4 are simultaneously activated (hereinafter, referred to as first case), the electric current flows from a first power line 21 to a second power line 22 via the transistor Q1, the coils 41 and the transistor Q4. On the other hand, in a case where only the transistor Q2 and the transistor Q3 are simultaneously activated (hereinafter, referred to as second case), the electric current flows from the first power line 21 to the second power line 22 via the transistor Q2, the coils 41 and the transistor Q3.

As is described above, a flowing direction of the electric current to the coils 41 in the first case and a flowing direction of the electric current to the coils 41 in the second case are different from each other. Accordingly, electromotive force generated in the coils 41 in the first case and electromotive force generated in the coils 41 in the second case are different, thus achieving to switch a direction of electromagnetic force corresponding to the electromotive force of the first case and a direction of electromagnetic force corresponding to the electromotive force of the second case. Thus, the attracting force or the repulsive force is generated between the coils 41 and the permanent magnets 42 in accordance with conditions. Additionally, with respect to control of movement of the transistors Q1 to Q4, a PWM (Pulse Width Modulation) control is performed by a PWM driving portion 13 of the controlling portion 10, which will be described later. Further, diodes D1, D2, D3 and D4 are provided at the transistors Q1, Q2, Q3 and Q4, respectively, in a manner where cathode terminals are connected to corresponding collector terminals and anode terminals are connected to corresponding emitter terminals. Herein, when being energized, energy is stored in the coils 41. The diodes D 1 to D4 are provided so that peripheral components of the coils 41 may not be adversely affected, when stopping energizing the coils 41, by reversed electromotive force generated due to the energy stored in the coils 41.

As described above, the suspension apparatus 100 PWM-controls the driver 20 on the basis of a sensor signal outputted from the state detecting sensor 30 so as to control the load outputted by the single-phase linear motor 40. More specifically, the controlling portion 10 performs the PWM-control. The sensor signal is inputted to the controlling portion 10 from the state detecting sensor 30, which is structured by the vertical acceleration sensor 31, the height sensor 32, the speed sensor 33, the steering angle sensor 34, and so on. The sensor signal is converted to a processable electric signal via a sensor interface 11 and is then transmitted to a calculating portion 12. In the calculating portion 12, control variable of the single-phase linear motor 40 is calculated on the basis of the sensor signal.

Next, the control variable of the single-phase linear motor 40, which is calculated by the calculating portion 12, is transmitted to the PWM driving portion 13. Then, a PWM signal is inputted to base terminals of the corresponding transistors Q1 to Q4 of the driver 20 from the PWM driving portion 13 in response to the control variable, thus operating the transistors Q1 to Q4. Thus, as described above, the coils 41 may be applied with the electric current in response to the control variable of the load outputted by the single-phase linear motor 40.

The suspension apparatus 100 is driven by being applied with voltage from a battery 50 of the vehicle. However, the battery 50 merely outputs a predetermined voltage value (for example, 12V), hence requiring the voltage value of the battery 50 to be reduced so as to be equal to or lower than an acceptable operating voltage value of each component such as the sensor interface 11, the calculating portion 12, or the like, in order to apply the voltage to the suspension apparatus 100 as driving voltage of such components. Accordingly, a first power source portion 14 is provided between the battery 50 and the sensor interface 11 and between the battery 50 and the calculating portion 12. The first power source portion 14 is configured to reduce the voltage value outputted by the battery 50 to an appropriate voltage value for the components such as the sensor interface 11, the calculating portion 12, or the like. A regulator or a step-down DC/DC converter may be employed as the first power source portion 14.

When generating electromagnetic force to the coils 41 of the single-phase linear motor 40, greater electromagnetic force may be obtained by applying greater electric current. Accordingly, for the purpose of inputting greater electric current to the single-phase linear motor 40 via the driver 20, greater level of voltage is to be applied to the first power line 21. As described above, the voltage value outputted from the battery 50 is a constant value. Therefore, a step-up DC/DC converter 51 is provided so as to increase the voltage value of the battery 50. Further, a second power source portion 15 is provided at an output stage of the step-up DC/DC converter 51 so as to stabilize supply of the voltage to the driver 20. Additionally, the suspension apparatus 100 may be configured without the second power source portion 15 in a case where the step-up DC/DC converter 51 is configured to output desired voltage for the operation of the driver 20.

So configured, the single-phase linear motor 40 of the suspension apparatus 100 generates the attracting force or the repulsive force between the coils 41 and the permanent magnets 42. In addition, since the suspension apparatus 100 is provided at the vehicle, there is a requirement for providing some safety measures. Accordingly, the controlling portion 10 includes a protecting portion 16 for a protection of the suspension apparatus 100. More specifically, the protecting portion 16 is provided for preventing smoke generation and/or ignition, for example, even in a case where an abnormality occurs to any parts of the suspension apparatus 100. A fuse may be employed as the protecting portion 16, for example. Alternatively, the protecting portion 16 may be structured with a protection circuit.

Next, a structure and function of the shock absorber 60 of the suspension apparatus 100 will be described hereinafter. Fig. 2 is a schematic view illustrating a partial structure of the suspension apparatus 100. The shock absorber 60 is one of components configuring the electromagnetic suspension in which vibration of the vehicle body-side member 80 is controlled by the single-phase linear motor 40. The shock absorber 60 is structured with an outer cylinder 61, a rod 62, an upper mount 63, a valve 64, a first assembling portion 65, a second assembling portion 66, the single-phase linear motor 40 configured by the coils 41 and the permanent magnets 42, a harness (not illustrated), and so on. The first assembling portion 65 is employed for assembling the shock absorber 60 on the vehicle body-side member 80. The second assembling portion 66 is employed for assembling the shock absorber 60 on the wheel-side member 81. Further, the permanent magnets 42 are secured to the outer cylinder 61 via jigs, and the outer cylinder 61 is assembled on the wheel-side member 81 by the second assembling portion 66, hence allowing the permanent magnets 42 to move in association with the wheel-side member 81. On the other hand, the coils 41 are assembled on the first assembling portion 65 via jigs, hence moving in association with the vehicle body-side member 80. Accordingly, the relative position (relative displacement) between the coils 41 and the permanent magnets 42 is changed, hence allowing a relative position between the vehicle body-side member 80 and the wheel-side member 81 to change.

As described above, the single-phase linear motor 40 is a single-phase motor including the two coils 41. The coils 41 are supplied with the electric current by the harness (not illustrated). The electromagnetic force is activated in the coils 41 in response to the electric current, thus generating attracting force or the repulsive force between the coils 41 and the permanent magnets 42. Accordingly, vertical force (force in the up-down direction) is generated in the shock absorber 60, thus performing load control of the electromagnetic suspension. More specifically, load control of the electromagnetic suspension is performed, by controlling the load outputted by the single-phase linear motor 40, on the basis of the sensor signal from the state detecting sensor 30 so as to counteract, or absorb, the vibration of the vehicle in the vertical (up and down) direction (hereinafter, referred to as vertical vibration). Accordingly, the vertical vibration of the vehicle may not be transmitted to an occupant of the vehicle, thus providing the occupant of the vehicle with comfortable riding quality.

Further, when performing the load control of the electromagnetic suspension by means of the shock absorber 60, hydraulic control is also performed in response to conditions of vehicle, a road surface on which the vehicle drives, or the like, in addition to the load control performed by the single-phase linear motor 40 (i.e., an electric control). More specifically, the hydraulic control is performed so as to smoothly change a position of the vehicle body-side member 80 in the vertical direction (hereinafter, referred to as vertical position) even in a case where a large load (vertical vibration) is applied to each wheel and large load controlling force is required, for example. In other words, the load control may be performed only by the single-phase linear motor 40 (electric control) and by a combination of the electric control of the single-phase linear motor 40 and the hydraulic control. Thus, the load controlling force of the suspension apparatus 100 may be adjusted within a variable range. A space defined by the outer cylinder 61 and the rod 62 serves as a hydraulic chamber 68, which communicates with a hydraulic chamber 69 via the valve 64. Herein, one of the hydraulic chambers 68 and 69 serves as a first hydraulic chamber and the other of the hydraulic chambers 68 and 69 serves as a second hydraulic chamber. Flowing volume of fluid flowing between the hydraulic chambers 68 and 69 is adjusted by the valve 64. The shock absorber 60 is operated by applying hydraulic pressure, thus smoothly changing the vertical position of the vehicle body-side member 80. The hydraulic control is performed by controlling an opening degree of the valve 64, such as by controlling orifice, in response to the control of the load outputted by the single-phase linear motor 40. In order to reduce the relative movement between the vehicle body-side member 80 and the wheel-side member 81, the opening degree of the valve 64 is arranged to be small. On the other hand, when readily allowing the relative movement between the vehicle body-side member 80 and the wheel-side member 81, the opening degree of the valve 64 is arranged to be large. Additionally, control of the valve 64 may be performed by the controlling portion 10 via the harness (not illustrated).

The suspension apparatus 100 further includes a support spring 67 for supporting the vehicle, a separator 71 for separating the second hydraulic chamber 69 from an air chamber 70, a bump rubber (bump stopper) 72, a rebound stopper 73, and so on.

As described above, in a case where a change of the vertical position and the vertical acceleration of the vehicle (i.e., the vehicle boy-side member 80) is detected by the state detecting sensor 30 in response to the condition of the road surface and/or the driving condition of the vehicle, the load outputted by the single-phase liner motor 40 is controlled. Thus, the vehicle body-side member 80 and the wheel-side member 81 are relatively moved and/or degree of the relative movement therebetween is reduced, thus absorbing shock received by the vehicle. The load control of the single-phase linear motor 40 is performed independently with respect to each wheel. Therefore, the electromagnetic suspension of each wheel is controlled independently, thus providing the occupant of the vehicle with an appropriate riding quality.

Further, because the single-phase linear motor 40 is employed for the suspension apparatus 100, operation speed of the suspension apparatus 100 may be improved in comparison with a case where a three-phase motor is employed, for example. With the three-phase motor, the suspension apparatus may be controlled to oscillate (contract and extend) at 1 to 3 Hz. On the other hand, the suspension apparatus 100 may be controlled to oscillate (contract and extend) at 10 to 20 Hz with the single-phase linear motor 40. Accordingly, the suspension apparatus 100 is quickly moved in response to the sensor signal from the state detecting sensor 30, thus providing the occupant with the comfortable riding quality. Further, by employing the single-phase linear motor 40 in place of the three-phase motor, a structure of the suspension apparatus 100 may be simplified. In addition, the number of other components used for the suspension apparatus 100, such as Hall ICs, a detection circuit, driving transistor, or the like, for example, may be reduced. Accordingly, cost for structuring the suspension apparatus 100 may be reduced.

The suspension apparatus 100 may be structured to recover force generated in the shock absorber 60 as regenerated current. With such a structure, in a case where the vibration of the wheels is severe because of the condition of the road surface and/or the driving condition of the vehicle and an oscillation frequency of stroke of the shock absorber 60 is equal to or greater than a predetermined frequency, the force generated in the shock absorber 60 may be regenerated. The oscillation frequency of the stroke of the shock absorber 60 (i.e., frequency of the change of the relative position between the vehicle body-side member 80 and the wheel-side member 81) is calculated on the basis of a result detected by the height sensor 32. When the oscillation frequency of the stroke of the shock absorber 60 includes high frequency wave (which is equal to or greater than 15 Hz, for example), energization to the coils 41 of the single-phase linear motor 40 is stopped. When the shock absorber 60 is operated (contract and extend) under such condition, the electromotive force is generated in the coils 41, hence recovering the electromotive force as the regenerated current. Accordingly, energy consumption of the battery 50 may be restrained, and in addition, the battery 50 may be charged with the electric current. Thus, energy efficiency may be effectively improved. Additionally, when the valve 64 is controlled to be fully opened, speed of changing the relative position between the vehicle body-side member 80 and the wheel-side member 81 is set to be high, hence efficiently executing a process relating to the regeneration of the electromotive force. With such control, shock absorbing effect may be obtained by the electromagnetic force generated between the coils 41 and the permanent magnets 42 of the single-phase linear motor 40 by the stroke of the shock absorber 60, even without performing the control of the single-phase linear motor 40.

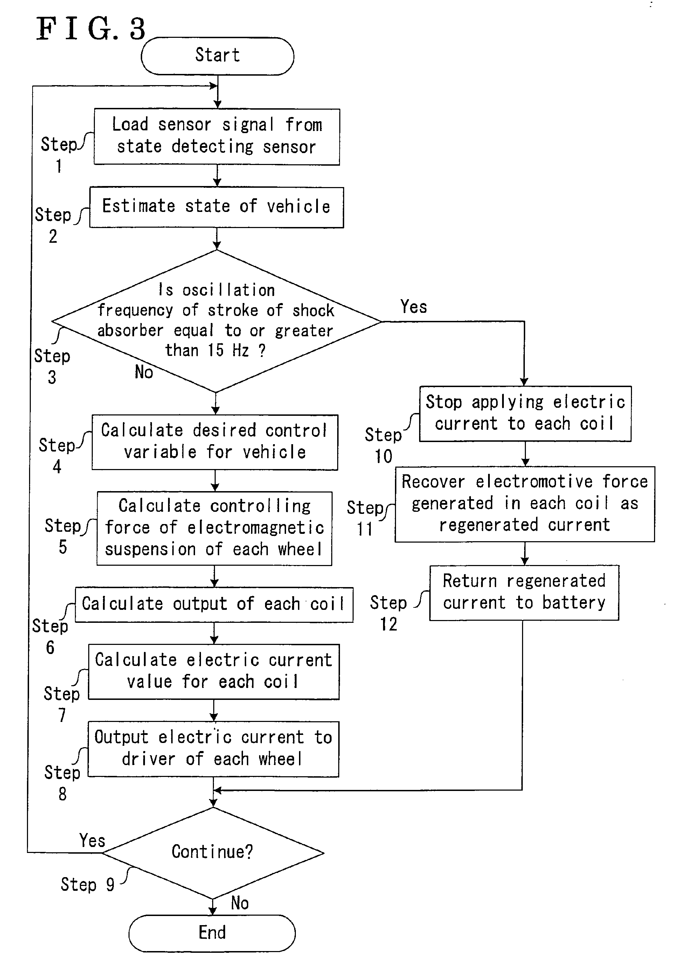

Next, calculation performed in the calculating portion 12 so as to control the suspension apparatus 100 may be described hereinafter with reference to a flowchart, which is illustrated in Fig. 3. Firstly, the sensor signal outputted from the detecting sensor 30, i.e., from the vertical acceleration sensor 31, the height sensor 32, the speed sensor 33 and the steering angle sensor 34, is inputted (loaded) to the controlling portion 12 via the sensor interface 11 (Step 1). In the sensor interface 11, the sensor signal outputted from each sensor is converted to an electric signal so as to be processable in the calculating portion 12.

Then, the calculating portion 12 performs an estimating calculation of the condition of the vehicle on the basis of the sensor signal outputted from such sensors (Step 2). By the estimating calculation, the controlling portion 12 recognizes a degree of the vibration of the vehicle body received from the acceleration of the vehicle in the vertical direction and further recognizes whether or not the steering wheel is turned, for example. Accordingly, the condition of the vehicle may be recognized by the estimating calculation.

The calculating portion 12 calculates the oscillation frequency of the stroke of the shock absorber 60 (i.e., the frequency of the change of the relative position between the vehicle body-side member 80 and the wheel-side member 81) on the basis of sensor output from the height sensor 32 and determines whether or not the oscillation frequency of the stroke of the shock absorber 60 is equal to or higher than 15 Hz. When the oscillation frequency of the stroke of the shock absorber 60 is lower than 15 Hz (Step 3: "NO"), the control of load outputted by the single-phase linear motor 40 is performed. Firstly, the calculating portion 12 calculates desired control variable for controlling the vibration of the vehicle, i.e., the vibration received by the vehicle body-side member 80 (Step 4). Herein, the desired control variable corresponds to variable of a control performed for counteracting (absorbing) the acceleration of the vehicle (the vehicle body-side member 80) in the vertical direction.

Then, in Step 5, the calculating portion 12 calculates the controlling force of the electromagnetic suspension of each wheel in accordance with the desired control variable obtained by the calculation in Step 4. Next, in Step 6, the calculating portion 12 calculates the output of the coils 41 of the single-phase linear motor 40 in accordance with the controlling force calculated in Step 5. After the output of the coils 41 is obtained, the value of the electric current for applying to the coils 41 is obtained (Step 7). The above series of calculations are performed for each wheel respectively, thus obtaining the value of the electric current applied to the coils 41 of the shock absorber 60 for each wheel respectively. Next, the electric current corresponding to the value of the electric current is outputted to the driver 20 of each wheel (Step 8). The electric current outputted in Step 8 is the electric current which is PWM-controlled. The calculating portion 12 repeats such process on the basis of a predetermined calculation frequency (Step 9: "YES"). Thus, by controlling the load outputted by the single-phase linear motor 40, the comfortable riding quality may be provided to the occupant of the vehicle. Additionally, in the above described case, the shock absorption efficiency may be improved by controlling the opening degree of the valve 64 in addition to the control of the single-phase linear motor 40.

Back to Step 3, when the oscillation frequency of the stroke of the shock absorber 60 (the frequency of the change of the relative position between the vehicle body-side member 80 and the wheel-side member 81) is equal to or more than 15 Hz (Step 3: "YES"), the energization to the coils 41 of the single-phase linear motor 40 is stopped (Step 10). When the shock absorber 60 is operated (contracts and extends) under such condition, the electromotive force is generated in the coils 41, hence recovering the electromotive force as the regenerated current (Step 11). The recovered regenerated current is returned to the battery 50 (Step 12). As described above, in the suspension apparatus 100, the battery 50 is charged with the electric current regenerated in the electromagnetic suspension. Therefore, the energy consumption of the battery 50 may be efficiently improved. Thus, according to the suspension apparatus 100 of the first embodiment, the vibration of the vehicle body is restrained to improve the riding quality, and control response performance may be increased at low cost.

Further, as described above, performance of the suspension apparatus 100 is achieved by a combination of the shock absorber 60 including the single-phase linear motor 40 and the electric load control. In the suspension apparatus 100, a moving amount of the vehicle body-side member 80 in the vertical direction (up-down direction) is detected by a detection amount of the state detecting sensor 30 without monitoring, or checking, a state of components below the spring (i.e., the wheel-side member 81). Further, desired load of the single-phase linear motor 40 for restraining up-down movement of the vehicle body-side member 80 is estimated. Thus, the shock absorption is actively performed by the single-phase linear motor 40. Therefore, the load for counteracting the vertical vibration of the vehicle is actively applied from the shock absorber 60 to the vehicle body-side member 80 provided above the spring, thus improving the riding quality of the vehicle. Accordingly, there may be no need to detect a condition of components below the spring. Thus, sensors for detecting the condition of the wheel-side member 81 may be removed from the shock absorber 60, hence achieving a simple structure of the suspension apparatus 100.

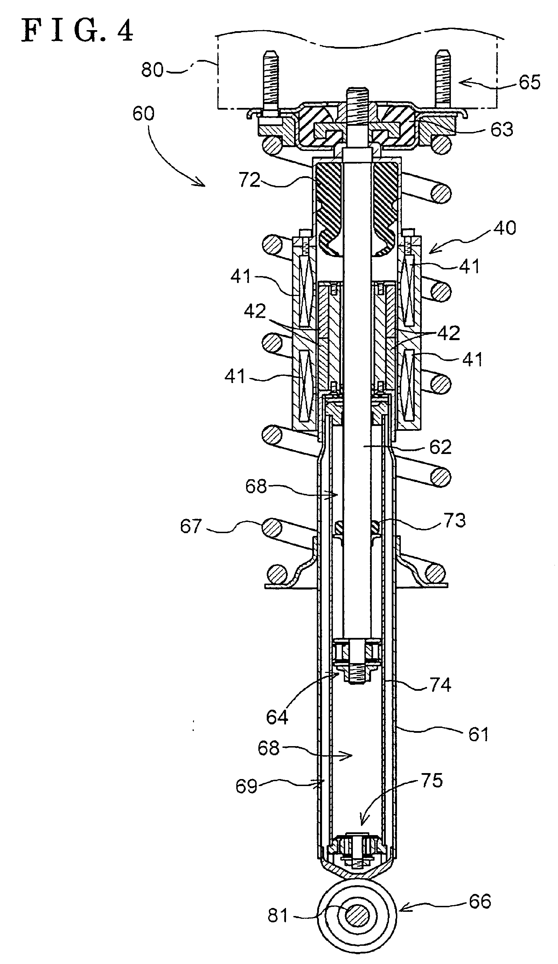

A second embodiment of the present invention will be described hereinafter. Fig. 4 is a schematic view illustrating the partial structure of the suspension apparatus 100 according to the second embodiment. The shock absorber 60 according to the first embodiment is a single cylinder absorber. On the other hand, in the second embodiment, a plural cylinder absorber is employed for the shock absorber 60, which is different from the first embodiment. More specifically, the shock absorber 60 includes an inner cylinder 74 in addition to the outer cylinder 61, and the hydraulic chamber 69 is defined between the inner cylinder 74 and the outer cylinder 61. Further, in the shock absorber 60, two valves 64 and 75 are provided. In a compression cycle of the shock absorber 60 (i.e., when the rod 62 is moved downwardly), the fluid in the shock absorber 60 is moved from the hydraulic chamber 68 to the hydraulic chamber 69 via the valves 64 and 75. In an extension cycle of the shock absorber 60 (i.e., when the rod 62 is moved upwardly), the fluid in the shock absorber 60 is moved from the hydraulic chamber 69 to the hydraulic chamber 68 via the valves 64 and 75. The coils 41 of the single-phase linear motor 40 are integrally assembled on the upper mount 63, and the permanent magnets 42 are assembled on the outer cylinder 61, in the same manner as the first embodiment, thus allowing the relative movement between the coils 41 and the permanent magnets 42. In the second embodiment, the control of the electromagnetic suspension is performed by means of the control of the single-phase linear motor 40 and the control of the valves 64 and 75. The process of the control of the electromagnetic suspension is performed in the same manner as the first embodiment. Accordingly, the suspension apparatus 100, with which the riding quality of the vehicle may be improved and which achieves reduction in cost and includes a high control response performance because of the control of the load outputted by the single-phase linear motor 40, may be structured.

According to the above described embodiments, the load control of the single-phase linear motor 40 for restraining the vertical (up-down) movement of the vehicle (vehicle body-side member 80) is calculated on the basis of the sensor signal outputted by the vertical acceleration sensor 31. However, the above described embodiments may be modified as described herewith. For example, movement of the vehicle may be calculated on the basis of the sensor signal of the height sensor 32, thus determining the control of the load outputted by the single-phase linear motor 40 on the basis of a result of the calculation.

Further, according to the above described embodiments, a threshold value of the oscillation frequency of the stroke of the shock absorber 60 of each wheel is predetermined to be 15 Hz, and when the oscillation frequency of the stroke of the shock absorber 60 is equal to or higher than 15 Hz, the electromotive force, which is generated in the coils 41 by the stroking of the shock absorber 60, is used as the regenerated current. Alternatively, the threshold value of the oscillation frequency of the shock absorber 60 may be predetermined to be another value.

Still further, as described above, in the suspension apparatus 100, the control of the load outputted by the single-phase linear motor 40 is performed by generating the attracting force or the repulsive force between the coils 41 and the permanent magnets 42 of the shock absorber. Position of the coils 41 and the permanent magnet 42 may be appropriately corrected by the height sensor 32 at a predetermined timing during the operation of the suspension apparatus 100. So configured, an accurate control may be performed. Additionally, the predetermined timing for correcting the position of the coils 41 and the permanent magnets 42 may not necessarily be executed in seconds. Alternatively, the predetermined time for correcting the position of the coils 41 and the permanent magnets 42 may be executed in minutes, in hours, or in accordance with a driving distance, for example.

According to the above-described embodiments, the suspension apparatus 100 performs the load control of the electromagnetic suspension. The load control of the electromagnetic suspension may be performed by a PID control, feed-forward control, or the like, for example.

## Claims

1. A suspension apparatus, comprising:
a single-phase linear motor (40) including a coil (41) adapted to be provided at one of a vehicle body-side member (80) and a wheel-side member (81) of a vehicle, the single-phase linear motor (40) further including a permanent magnet (42) adapted to be provided at the other of the vehicle body-side member (80) and the wheel-side member (81) of the vehicle;
a state detecting sensor (30) detecting a relative moving state between the vehicle body-side member (80) and the wheel-side member (81) and an absolute moving state of the vehicle body-side member (80); and
a controlling portion (10) controlling a load outputted by the single-phase linear motor (40) on the basis of a result detected by the state detecting sensor (30).

2. The suspension apparatus according to claim 1, further comprising:
a shock absorbing mechanism (60) including first and second hydraulic chambers (68/69), each of which volume is changeable in accordance with a relative movement between the vehicle body-side member (80) and the wheel-side member (81), the shock absorbing mechanism (60) further including a valve (64, 75) for adjusting volume of fluid flowing between the first and second hydraulic chambers (68/69).

3. The suspension apparatus according to claim 1, further comprising:
a shock absorber (60), wherein
the suspension apparatus (100) recovers electromotive force generated in the single-phase linear motor (40) by a stroke of the shock absorber (60) as regenerated current.

4. The suspension apparatus according to claim 2, wherein
the shock absorbing mechanism (60) includes a shock absorber, and
the suspension apparatus (100) recovers electromotive force generated in the single-phase linear motor (40) by a stroke of the shock absorber (60) as regenerated current.

5. The suspension apparatus (100) according to claim 1, further comprising:
a shock absorber (60) includes an outer cylinder (61) assembled on the wheel-side member (81) of the vehicle, wherein
the permanent magnet (42) is provided at the outer cylinder (61) of the shock absorber (60), and
the coil (41) is provided at the vehicle body-side member (80).

6. The suspension apparatus (100) according to claim 2, wherein
the shock absorbing mechanism (60) includes a shock absorber having an outer cylinder (61) assembled on the wheel-side member (81) of the vehicle,
the permanent magnet (42) is provided at the outer cylinder (61) of the shock absorber (60), and
the coil (41) is provided at the vehicle body-side member (80).

7. The suspension apparatus (100) according to any of claims 3 and 4, wherein
the shock absorber (60) includes an outer cylinder (61) assembled on the wheel-side member (81) of the vehicle,
the permanent magnet (42) is provided at the outer cylinder (61) of the shock absorber (60), and
the coil (41) is provided at the vehicle body-side member (80).

8. The suspension apparatus (100) according to claim 2, wherein
load received by the vehicle is controlled by a combination of an electric control of the single-phase linear motor (40) performed by the controlling portion (10) and a hydraulic control performed by the shock absorbing mechanism (60).
